**Europäisches Patentamt**

**European Patent Office**

**Office européen des brevets**

(11) Veröffentlichungsnummer: **0 209 147**
**A2**

(12) **EUROPÄISCHE PATENTANMELDUNG**

(21) Anmeldenummer: 86109863.0

(22) Anmeldetag: 18.07.86

(51) Int. Cl.⁴: **A 23 N 5/00**

(30) Priorität: 19.07.85 DE 3525809
13.09.85 DE 3532701

(43) Veröffentlichungstag der Anmeldung: 21.01.87
**Patentblatt 87/4**

(84) Benannte Vertragsstaaten: **DE FR GB IT NL**

(71) Anmelder: **Frasch, Wilhelm, Auchtertweg 12,
D-7315 Weilheim 2 (Hepsisau) (DE)**
Anmelder: **Elser, Karl, Hauptstrasse 22,
D-7315 Weilheim 2 (Hepsisau) (DE)**

(72) Erfinder: **Frasch, Wilhelm, Auchtertweg 12,
D-7315 Weilheim 2 (Hepsisau) (DE)**
Erfinder: **Elser, Karl, Hauptstrasse 22,
D-7315 Weilheim 2 (Hepsisau) (DE)**

(74) Vertreter: **Gramm, Werner, Prof. Dipl.-Ing. et al,
Patentanwälte Gramm + Lins
Theodor-Heuss-Strasse 2, D-3300 Braunschweig (DE)**

(54) Verfahren und Vorrichtung zum Herstellen geschälter Nüsse.

(57) Ein Verfahren zur Herstellung geschälter Nüsse, insbesondere Pistazien, enthält den Verfahrensschritt, die Nüsse in Längsrichtung langsam und kontinuierlich zu stauchen und im Moment des Bruchs der Schalen die Stauchung nicht zu vergrössern.

Vorzugsweise kann diese Stauchung in Längsrichtung mit Hilfe zweier leicht schräg zueinander verlaufender rotierender Scheiben geschehen.

# Patentanwälte GRAMM + LINS

**0 209 147**
Dipl.-Ing. Prof. Werner Gramm
Dipl.-Phys. Edgar Lins

European Patent Attorneys

Anwaltsakte
165-31 EP-1

Datum
17. Juli 1986

## Verfahren und Vorrichtung
## zum Herstellen geschälter Nüsse

Die Erfindung betrifft ein Verfahren und eine Vorrichtung zum Gewinnen geschälter Nüsse, insbesondere Pistazien, bei dem die ungeschälten Nüsse einer im wesentlichen in Längsrichtung wirkenden Kraft unterworfen werden.

Pistazien haben eine sehr widerstandsfähige Schale mit unregelmäßiger Form. Im Gegensatz zu beispielsweise Walnüssen besitzen sie keine ausgeprägte Naht, und ihre Schale ist unregelmäßig geformt. Zur Zeit ist es üblich, die Pistazien in den Ländern, in denen sie wachsen, mit Steinen oder einem Hammer aufzuschlagen. Dabei wird auf die Schale ein Impuls übertragen, der zu einer Deformationskraft führt. Ist dieser Impuls zu klein, bleibt die Schale ungeöffnet. Ist er dagegen zu groß, so läßt unmittelbar nach dem Aufspringen der Schale der Widerstand nach, so daß aufgrund der großen Masse des Hammerkopfes dieser weiterbewegt wird und die Pistazie selbst zerstört. Da die zum Öffnen der Pistazien erforderlichen Kräfte stark schwanken, ist es auf diese Weise kaum möglich, ein wirtschaftlich vernünftiges Ergebnis zu erzielen.

Ebenfalls bekannt ist ein Verfahren, bei dem die Pistazien mit Hilfe von Dampf geöffnet werden. Dabei bleiben zwar die Kerne intakt, sie verlieren jedoch aufgrund der Temperatur ihre Qualität. Andere Nuss-Sorten lassen sich leichter öffnen und schälen, doch treten auch dort immer wieder Schwierigkeiten auf, da es sich bei Nüssen um natürliche Produkte handelt, die unterschiedlich gewachsen sind.

Der Erfindung liegt die Aufgabe zugrunde, ein Verfahren und eine Vorrichtung zum Herstellen geschälter Nüsse zu schaffen, das sich wirtschaftlich anwenden läßt, bei dem die Qualität der geschälten Nüsse erhalten bleibt und das mit geringem Ausschuß arbeitet, und insbesondere auch für Pistazien anwendbar ist.

Zur Lösung dieser Aufgabe ist erfindungsgemäß vorgesehen, daß die Nüsse im Bereich ihrer Enden ergriffen, in Längsrichtung in kontinuierlich steigendem Maße gestaucht und bei Bruch der Schale sofort freigegeben werden. Das Stauchen erfolgt im Vergleich zu den Hammerschlägen relativ langsam und es ist durch das geometrische Stauchen dafür gesorgt, daß bei Bruch der Schale keine Krafteinwirkung mehr auf den Kern erfolgt. Daher ist es mit diesem Verfahren möglich, mit geringem Ausschuß intakte geschälte Pistazien herzustellen.

In Weiterbildung kann vorgesehen sein, daß die Nüsse während des Stauchens vorzugsweise quer zu ihrer Längsrichtung bewegt werden. Diese Art der Bewegung macht eine kontinuierlich verlaufende Bearbeitung besonders einfach.

Da während des allmählichen Ergreifens der Nüsse aufgrund der unregelmäßigen Form der Schalen die Gefahr bestehen kann, daß die Nüsse der Stauchung ausweichen, schlägt die Erfindung weiterhin vor, daß die Nüsse mindestens während des Ergreifens und zu Beginn ihrer Stauchung seitlich ihres Bewegungsweges geführt werden können. Durch diese seitliche Führung wird ein Ausweichen der Nüsse unmöglich gemacht, was die Ausbeute des Verfahrens erhöht.

Die Erfindung sieht weiterhin vor, daß die Nüsse während des Stauchens auf einem von ihrer Größe abhängigen Weg bewegt werden können. Da die Nüsse unterschiedliche Größen haben und diese unterschiedlichen Größen statistisch verteilt auftreten, ist damit dafür gesorgt, daß zwei Nüsse während des von der Erfindung vorgeschlagenen Verfahrens sich gegenseitig möglichst wenig beeinflussen. Besonders günstig kann es sein, wenn die Nüsse auf einem Kreisbogen bewegt werden.

Die Erfindung sieht vor, daß die Nüsse vor dem Ergreifen entsprechend ihrer Größe vorsortiert werden können. Dies kann die Ausbeute des Verfahrens ebenfalls vergrößern.

Damit die Nüsse in ihrer Schale möglichst sicher ergriffen und wirksam gestaucht werden können, kann vorgesehen sein, daß die Nüsse vor ihrem Ergreifen ausgerichtet werden.

Nach dem Brechen der Schale kann erfindungsgemäß vorgesehen sein, daß die geöffneten Nüsse zusammen mit ihren Schalen einer Windsichtung unterworfen werden. Diese Windsichtung dient dazu, die größeren Schalen von den kleineren Kernen zu trennen. Es kann dabei besonders vorteilhaft sein, wenn die geöffneten Nüsse zusammen mit ihren Schalen bzw. Schalenresten in einen nach oben gerichteten Saugluftstrom gebracht werden. Dieser Saugluftstrom saugt dann die Schalen nach oben, während die geschälten Nüsse nach unten fallen und dort gesammelt werden können.

Erfindungsgemäß kann vorgesehen sein, daß mehrere Nüsse im wesentlichen gleichzeitig bzw. zeitlich überlappend gestaucht werden. Dadurch wird es möglich, die Menge der zu schälenden Nüsse pro Zeiteinheit zu erhöhen.

Die Erfindung schlägt ebenfalls eine Vorrichtung zum Herstellen von geschälten Nüsse vor, die erfindungsgemäß mindestens ein von einem Antrieb antreibbares, zyklisch arbeitendes Anpreßelement mit einem sich allmählich verringernden Abstand von einem Gegenelement sowie eine Zuführeinrichtung zum Einbringen der ungeschälten Nüsse in den Bereich zwischen dem Anpreßelement und dem Gegenelement aufweist. Beispielsweise kann die Zuführeinrichtung nacheinander Nüsse in dem Bereich des Gegenelementes bringen, während von der anderen Seite her mit Hilfe eines Nockens o.dgl. die Nuss gestaucht wird.

Besonders günstig ist jedoch, wenn die Vorrichtung zwei von einem Antrieb antreibbare umlaufende Andrückelemente mit sich in Umlaufrichtung allmählich verringerndem gegenseitigem Abstand aufweist, wobei die Zuführeinrichtung die Nüsse in den Bereich zwischen den Andrückelementen liefert. Die beiden Andrückelemente können beispielsweise Ketten oder ähnliche Einrichtungen sein, die in ihrer Bewegungsrichtung einen sich verringernden gegenseitigen Abstand aufweisen und die Nüsse zwischen sich stauchen. Sobald die Schale nachgegeben hat, kann diese zusammen mit der Nuss weggeführt werden.

In Weiterbildung kann vorgesehen sein, daß im Freigabe-Bereich der Vorrichtung, beispielsweise im Freigabe-Bereich der Andrückelemente, eine mit einer Windsichteinrichtung verbundene Sammeleinrichtung zur Aufnahme der schalenlosen Nüsse und der Schalen bzw. Schalenelemente angeordnet ist. Diese Sammeleinrichtung sammelt die Nüsse und die Schalen auf und führt diese zu der Windsichteinrichtung, die die Schalen von den Nüsse trennt. Die Windsichteinrichtung kann beispielsweise ein horizontal arbeitendes Gebläse sein. Besonders günstig ist es jedoch, wenn die Windsichteinrichtung ein senkrecht verlaufendes, einen nach oben gerichteten Luftstrom enthaltendes Windsichtrohr aufweist, mit dem die einen Sammeltrichter aufweisende Sammeleinrichtung über ein eine Verengung aufweisendes Rohr verbunden ist. Dadurch wird es möglich, den Luftstrom in seiner Menge und Geschwindigkeit so einzustellen, daß die kleineren Kerne nach unten fallen, während die größeren Schalen nach oben weggeblasen bzw. gesaugt werden.

Insbesondere günstig ist es, wenn mit dem Windsichtrohr ein Sauggebläse verbunden ist, das in diesem den nach oben gerichteten Luftstrom erzeugt. Es hat sich herausgestellt, daß mit Hilfe eines Sauggebläses ein konstanterer Luftstrom hergestellt werden kann, der daher zu gleichmäßigeren Ergebnissen führt. Darüber hinaus hat die Verwendung eines Sauggebläses den Vorteil, daß auch durch den Sammeltrichter Luft angesaugt wird, so daß dessen Leistung nochmals verbessert werden kann. Eine solche Windsichtung eignet sich auch zur Auftrennung anderer Gemenge.

Durch das Windsichtrohr fallen die geschälten Nüsse herab. Erfindungsgemäß kann nun vorgesehen sein, daß das untere Ende des Windsichtrohres oberhalb einer Nachsortiereinrichtung endet. Mit Hilfe dieser Nachsortiereinrichtung können die geschälten Nüsse ihrer Größe nach sortiert werden. Darüber hinaus können hier ggf. noch ungeöffnet gebliebene Nüsse aussortiert werden, die dann der Vorrichtung nochmals zugeführt werden können.

Sortiereinrichtungen, wie sie von der Erfindung verwendet werden können, sind an sich bekannt. Sie können beispielsweise aus zwei zylindrischen gegensinnig rotierenden glatten Walzen bestehen, die beispielsweise mit Vorteil leicht divergierend angeordnet sein können. Aufgrund des gegensinnigen Rotierens der Walzen und ihrer Neigung gegenüber der Horizontalen rutschen die Nüsse in Längsrichtung auf den Walzen, wobei aufgrund der leichten Divergenz eine Größensortierung vorgenommen werden kann.

Besonders günstig ist es, wenn die Anpreßelemente zwei mit gleicher Drehzahl rotierende, leicht schräg zueinander gestellte Scheiben sind, deren aufeinander zu gewandte Flächen vorzugsweise leicht unregelmäßig profiliert sind. Die unregelmäßige schwache Profilierung dient dazu, die Nüsse an ihren Enden zu ergreifen. Aufgrund der leichten Schrägstellung der beiden Scheiben werden die Nüsse dann einer in Axialrichtung der Scheiben wirkenden Stauchung unterworfen. Die Schrägstellung der beiden Scheiben kann dabei je nach den Erfordernissen, der Größe der Scheiben, der Drehzahl usw. leicht variiert werden. Als besonders günstig hat es sich herausgestellt, wenn die Drehachsen beider Scheiben mit einer Horizontalebene einen Winkel von wenigen Grad und einer Vertikalebene einen etwa doppelt so großen Winkel einschließen.

Erfindungsgemäß kann vorgesehen sein, daß die Stelle des
geringsten Abstandes zwischen den beiden Scheiben in Drehrichtung gesehen hinter dem höchsten Punkt und vor dem horizontalen Durchmesser der Scheiben liegt, vorzugsweise
etwa im Bereich von etwa 45 - 60° hinter dem Scheitel.

Erfindungsgemäß kann die Zuführeinrichtung einen umlaufenden Riemen mit quer zu seiner Längsrichtung verlaufend angeordneten, prismenartigen Höckern aufweisen, die zwischeneinander Aufnahmeabteile zur Aufnahme je einer quer zur
Längsrichtung des Riemens liegenden Nuss bilden. Derartige
zahnartige Riemen lassen sich relativ einfach herstellen
und führen zu einer guten Zuführeinrichtung, mit deren Hilfe die Nüsse ausgerichtet und in regelmäßigen Zeitabständen
den Andrückelementen angeliefert werden. Bei der Verwendung
von rotierenden Andrückscheiben werden die Nüsse von diesen
Scheiben aus den Aufnahmeabteilen herausgehoben.

Es kann mit Vorteil vorgesehen sein, daß der Riemen über
eine etwa konzentrisch zu den Andrückscheiben angeordnete,
vorzugsweise zusammen mit diesen angetriebene Riemenscheibe
geführt ist. Auf diese Weise läßt sich der Antrieb besonders einfach ausgestalten. Es ist selbstverständlich auch
möglich, den Riemen mit einer anderen Geschwindigkeit oder
auch nicht konzentrisch zu den Andrückscheiben zu bewegen.

Um die Ausrichtung der Nüsse zu verbessern, kann vorgesehen
sein, daß der Riemen im Bereich des den Andrückscheiben
abgewandten Aufgabeendes eine Vibrationseinrichtung aufweist. Dadurch wird der Riemen in Vibrationen versetzt, die
ein Ausrichten der Nüsse verbessern.

Erfindungsgemäß kann vorgesehen sein, daß die Zuführeinrichtung zwischen einer Abgabestelle einer Vorsortiereinrichtung und den Andrückelementen angeordnet ist. Diese Vorsortiereinrichtung kann dazu vorgesehen sein, die Nüsse ihrer Größe nach vorzusortieren. Es können dort auch Schalenreste o.dgl. aussortiert werden. Erfindungsgemäß kann dabei von der Abgabestelle der Vorsortiereinrichtung zu der Aufgabestelle der Zuführeinrichtung ein Übergaberohr verlaufen, durch das die Nüsse hindurchrutschen.

Um den Aufbau des Riemens möglichst einfach zu gestalten, kann vorgesehen sein, daß zu beiden Seiten des Riemens Führungsbleche angeordnet sind. Diese brauchen selbstverständlich nicht aus Metall zu bestehen.

Es kann vorgesehen sein, daß im Bereich der Aufgabestelle des Riemens Abstreifelemente angeordnet sind, die ein gleichmäßiges Verteilen der Nüsse gewährleisten.

Im Übergangsbereich zwischen dem Zuführelement und den Andrückscheiben können nachgiebig angeordnete Leitelemente vorgesehen sein, die die Nüsse seitlich führen und diese insbesondere in den Abteilen der Zuführeinrichtung des Riemens halten. Insbesondere können die Leitelemente mehrere, unter Federwirkung stehende, vertikal bewegliche Schieber sein, die sich gegenüber ihrem jeweils benachbarten Schieber nur um einen begrenzten Betrag unabhängig bewegen können.

Die Erfindung eignet sich zum Öffnen bzw. Schälen verschiedenartiger Nüsse, wie Haselnüsse, Walnüsse, Mandeln und dgl.. Besonders wertvoll ist sie für die Gewinnung geschälter Pistazien, da diese bisher nur mit unzureichendem Ergebnis industriell geschält werden konnten.

Weitere Merkmale, Einzelheiten und Vorzüge der Erfindung
ergeben sich aus der folgenden Beschreibung bevorzugter
Ausführungsformen der Erfindung am Beispiel der Öffnung von
Pistazien sowie anhand der Zeichnung. Hierbei zeigen:

Fig. 1  eine stark vereinfachte schematische perspektivische Ansicht einer erfindungsgemäßen  Vorrichtung;

Fig. 2  eine Ansicht der Vorrichtung von vorne rechts

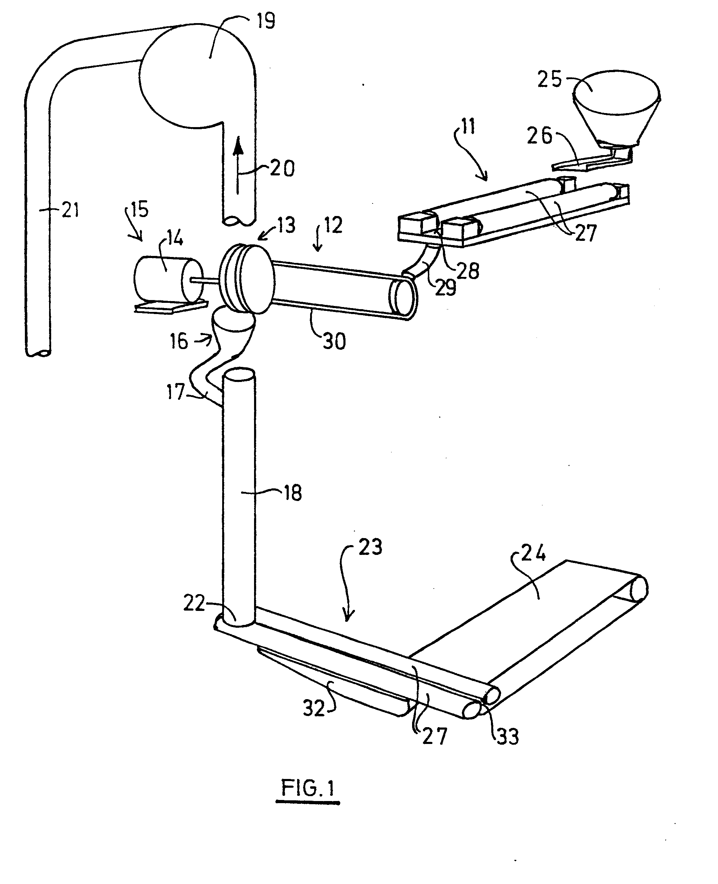

in Fig. 1;

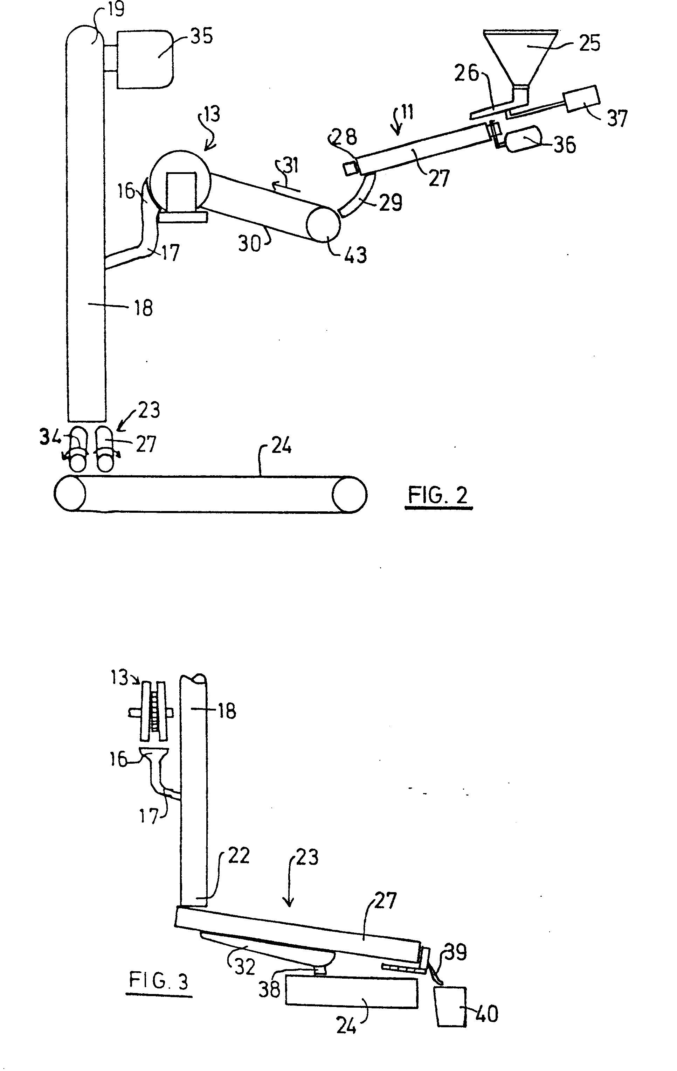

Fig. 3  eine Ansicht der Vorrichtung in Fig. 1 von
vorne links;

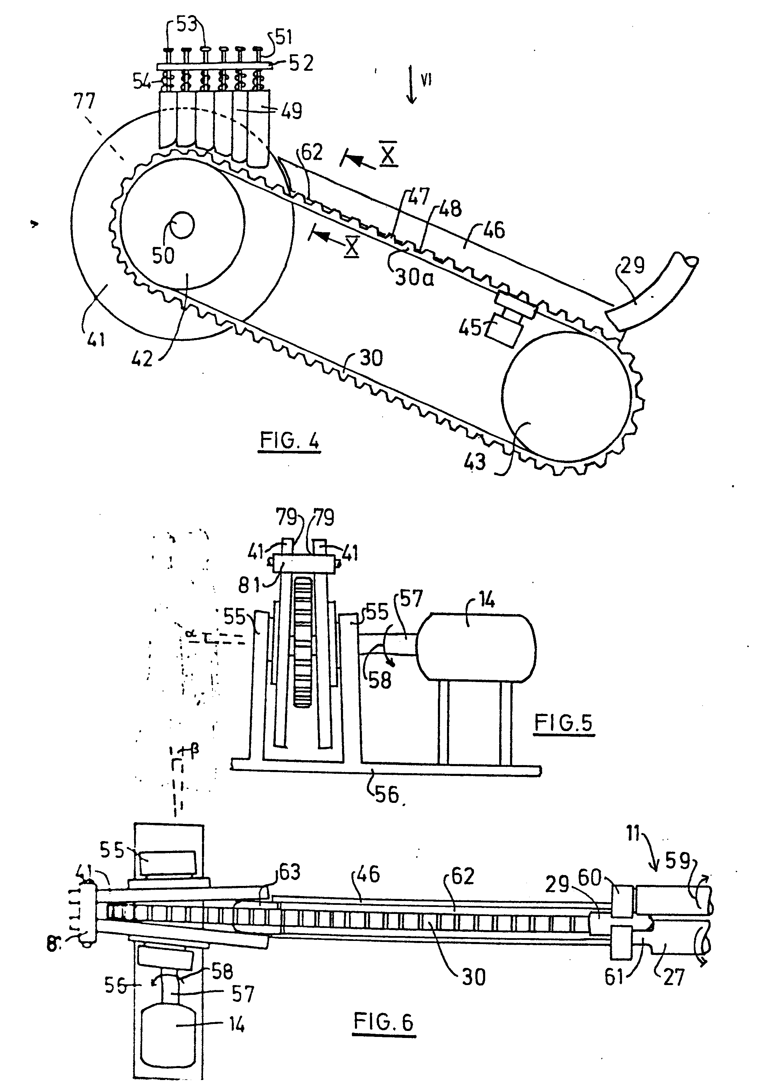

Fig. 4  eine vergrößerte vereinfachte Darstellung der
Zuführeinrichtung und der Andrückscheiben;

Fig. 5  eine abgebrochene vereinfachte Darstellung der
Anordnung in Fig. 4 in Richtung des Pfeiles V;

Fig. 6  eine Aufsicht auf die Anordnung in Fig. 4 in
Richtung des Pfeiles VI;

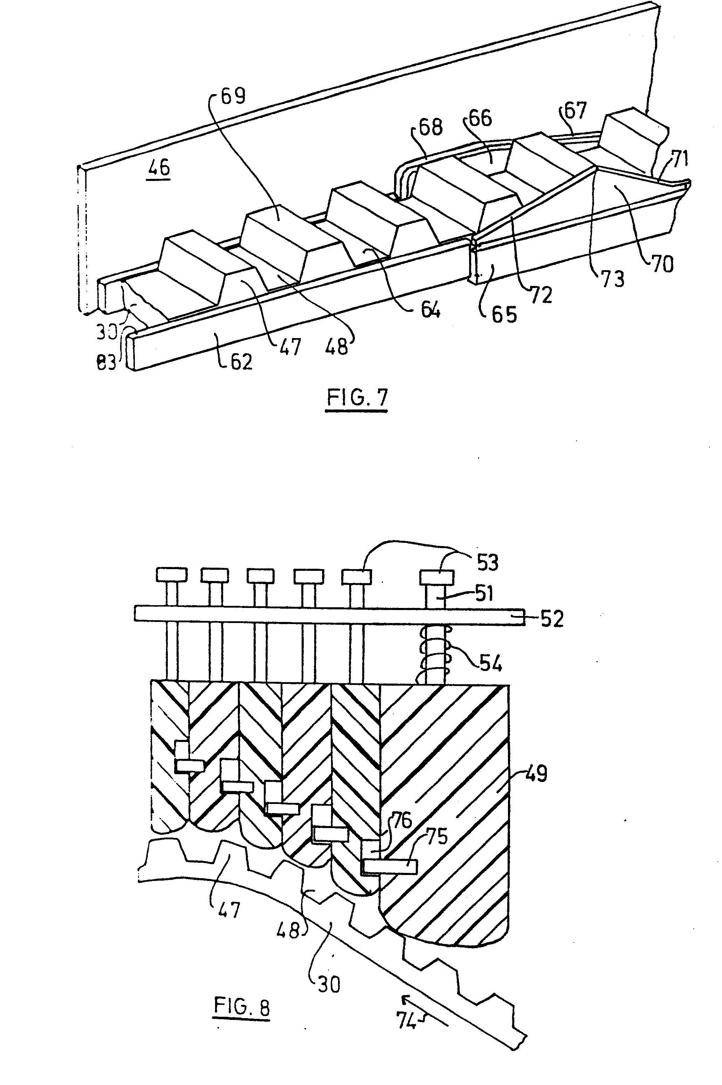

Fig. 7  eine stark vergrößerte perspektivische Einzelheit der Aufgabestelle des Zuführriemens;

Fig. 8  eine vereinfachte geschnittene Darstellung der
Leitelemente;

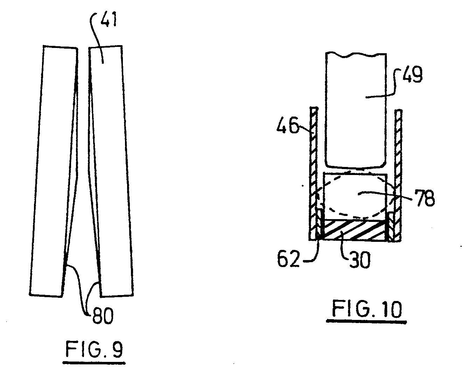

Fig. 9  eine schematische Ansicht zweier Andrückscheiben mit geänderter Oberfläche;

Fig. 10 einen Schnitt durch den Riemen etwa nach Linie
X-X in Fig. 4.

Fig. 1 zeigt zunächst in perspektivischer Ansicht eine Gesamtansicht der von der Erfindung vorgeschlagenen Vorrichtung. Die Vorrichtung enthält eine Vorsortiereinrichtung
11, von der eine Zuführeinrichtung 12 zu den beiden Andrückelementen 13 führt. Die Andrückelemente 13 und die
Zuführeinrichtung 12 werden von einem als Elektromotor 14
ausgebildeten Antrieb 15 angetrieben. Im Bereich der Andrückelemente 13, und zwar an deren Unterseite, ist ein
vereinfacht dargestellter Sammeltrichter 16 angeordnet, der
über ein Rohr 17 mit dem abgebrochen dargestellten Windsichtrohr 18 verbunden ist. Das Windsichtrohr 18 verläuft
senkrecht und enthält oberhalb der Andrückelemente 13 ein
Sauggebläse 19, das Luft in Richtung des Pfeiles 20 ansaugt. Die Luft wird dann über eine Auslaßleitung 21 weggeführt, wobei in der weggeführten Luft auch Pistazienschalen
enthalten sind.

Das untere Ende 22 des Windsichtrohres 18 mündet unmittelbar oberhalb einer Nachsortiereinrichtung 23, wobei die die
Nachsortiereinrichtung 23 verlassenden Pistazien auf ein
Transportband 24 gelangen. Auf diesem Transportband kann
eine Nachsichtung durchgeführt werden.

Die Arbeitsweise der von der Erfindung vorgeschlagenen, in
Fig. 1 dargestellten Vorrichtung ist die folgende. Die Pistazien werden in einen Trichter 25 eingegeben. Von diesen
gelangen sie über eine Schüttelrutsche 26 auf die Vorsortiereinrichtung, die aus zwei gegenläufig rotierenden Walzen 27 aufgebaut ist. Mit Hilfe der Vorsortiereinrichtung
11 werden Schalenreste o.dgl. entfernt. Es ist ebenfalls
möglich, mehrere Vorsortiereinrichtungen 11 anzuordnen, so
daß für jede Vorrichtung nur Pistazien bestimmter Größe
verwendet werden. Die Pistazien rutschen auf den rotierenden Walzen 27 von der Aufgabestelle unterhalb der Schüttelrutsche 26 zu ihrer Abgabestelle 28, von wo aus sie durch ein gebogenes Rohr 29 auf den Riemen 30 der Zuführeinrichtung 12 gelangen. Der Riemen 30 wird in Richtung des Pfeiles 31 angetrieben. Die Pistazien gelangen mit Hilfe des
sich aufwärts bewegenden Riemens 30 zwischen die beiden
Andrückelemente 13, wo sie gestaucht und dadurch geöffnet
werden. Die Pistazien fallen einschließlich ihrer Schalen
in den Sammeltrichter 16 und gelangen über das Rohr 17 in
das Windsichtrohr 18. Hier herrscht ein nach oben gerichteter Luftstrom, der die Schalen nach oben wegführt, während die Pistazien durch das Windsichtrohr 18 nach unten
auf die Nachsortiereinrichtung 23 fallen. Diese besteht
ebenfalls aus zwei gegenläufig angetriebenen Sortierwalzen
27, die ebenfalls nach vorne rechts abfallend, jedoch nicht
ganz parallel angeordnet sind. Sobald die Pistazie eine
Stelle erreicht, an der der Abstand zwischen den beiden
Sortierwalzen 27 der Nachsortiereinrichtung 23 größer ist
als die Pistazie, fallen sie nach unten und gelangen dort
durch eine Rutsche 32 oder direkt auf das Transportband 24.
Falls aus dem Rohr 18 vereinzelt noch ungeöffnete Pistazien
herausfallen, verlassen sie die Nachsortiereinrichtung 23
an deren freiem Ende 33, wo sie in ein spezielles Gefäß gelangen und anschließend wieder in den Trichter 25 geschüttet werden können.

Aus Fig. 2, die die Vorrichtung nach Fig. 1 von vorne
rechts zeigt, ist zu sehen, daß die Sortierwalzen 27 der
Nachsortiereinrichtung 23 leicht abfallend und leicht divergierend verlaufen. Sie rotieren in Richtung der Pfeile
34. Daher rutschen die Pistazien von dem freien Ende 22 des
Windsichtrohres 18 in Richtung auf das freie Ende 33 der
Nachsortiereinrichtung 23.

Das Windsichtrohr 18 verläuft senkrecht. Das oberhalb der
Andrückelemente 13 angeordnete Sauggebläse 19 wird von einem Motor 35 angetrieben. Die Leitung 17 zwischen dem Sammeltrichter 16 und dem Windsichtrohr 18 besitzt einen
gegenüber dem Windsichtrohr 18 wesentlich verringerten
Durchmesser und verläuft im letzten Bereich geradlinig
schräg nach unten. Der Sammeltrichter 16 ist derart ausgebildet, daß er möglichst nahe an die Andrückelemente 13
heranreicht, so daß der durch das Gebläse 19 erzeugte Luftstrom auch durch den Trichter 16 und die Leitung 17 saugt.

Der Riemen 30 verläuft in seinem oberen, sich den Andrückelementen 13 nähernden Abschnitt in Richtung nach oben, und
zwar unter einem Winkel von etwa 24° gegenüber der Horizontalen.

Die Vorsortiereinrichtung 11, die ebenfalls zwei gegenläufig angetriebene Sortierwalzen 27 aufweist, verläuft von
ihrem Aufgabeende zu ihrer Abgabestelle 28 abwärts, so daß
die Pistazien längs der Walzen 27 rutschen. Die beiden Walzen 27 werden mit Hilfe eines Motors 36 gegenläufig angetrieben.

Die unterhalb des Trichters 25 angeordnete Schüttelrutsche
26 wird mit Hilfe eines Antriebs 37 in Schwingungen versetzt.

Aus Fig. 3 geht nochmals die Nachsortiereinrichtung 23, die
unterhalb des Windsichtrohres 18 angeordnet ist, hervor.
Unterhalb der Sortierwalzen 27 ist die Rutsche 32 angeordnet, die einen Auslaß 38 im Bereich der linken Hälfte des
Transportbandes 24 aufweist. Es erfolgt dadurch eine gewisse grobe Sortierung der Pistazien in große und kleine, wobei die größeren im Bereich der rechten Hälfte des Transportbandes 24 anlangen. Über eine kurze Rutsche 39 gelangen
die ggf. nicht geöffneten Pistazien in einen Behälter 40.
Einzelheiten der Andrückelemente 13 gehen aus Fig. 4 und 5
hervor. Aus Fig. 5 ergibt sich, daß beide Andrückelemente als Andrückscheiben 41 ausgebildet sind, die leicht schräg zueinander verlaufen. Konzentrisch zu den Andrückscheiben 41 ist eine Riemenscheibe 42 gelagert, die ebenfalls von dem Motor 14 angetrieben wird. Sie rotiert mit der gleichen Umdrehungszahl wie die Andrückscheiben 41. Die Riemenscheibe hat einen kleineren Durchmesser als die beiden Andrückscheiben 41, wobei ihr Durchmesser etwa 55 Prozent des Durchmessers der Andrückscheiben 41 beträgt. Um die Riemenscheibe 42 herum erstreckt sich der Riemen 30, der über eine zweite freilaufende Riemenscheibe 43 geführt ist. Etwa an der Oberseite der zweiten, nicht angetriebenen Riemenscheibe 43 ist die Aufgabestelle der durch den Riemen 30 gebildeten Zuführeinrichtung. Hier mündet das Übergaberohr 29, das von der Vorsortiereinrichtung her kommt. In Bewegungsrichtung gesehen, unmittelbar hinter der nicht angetriebenen Riemenscheibe 43, ist eine Vibrationseinrichtung 45 angeordnet, die den Riemen 30 in Vibration versetzt. Zu beiden Seiten des Riemens 30 ist in dessen oberen, dem Transport der Pistazien dienenden Abschnitt 30a ein Führungsblech 46 angeordnet. Die Führungsbleche 46 verhindern ein seitliches Herausrutschen der Pistazien von dem Riemen 30, so daß ein einfacherer Riemen verwendet werden kann. Die auf der Außenseite des Riemens angeordneten, im Querschnitt etwa trapezförmigen Höcker 47 begrenzen zwischen sich ebenfalls etwa trapezartige Abteile 48, in denen die Pistazien liegen.

Im Bereich oberhalb der angetriebenen Riemenscheibe 42 zwischen den Andrückscheiben 41 sind insgesamt sechs Leitelemente 49 angeordnet, deren Unterseite im unbelasteten Zustand etwas oberhalb der Oberseite der Höcker 47 liegt. Die Leitelemente sind im wesentlichen rechts einer durch die Achse 50 der Riemenscheibe 42 verlaufenden Vertikalen angeordnet. Sie sind in senkrechter Richtung verschiebbar angeordnet, beispielsweise durch vor und hinter der Bildebene angebrachte Platten. Geführt sind sie jeweils mit
Hilfe eines Stiftes 51, der an dem Leitelement 49 festgemacht ist und sich durch einen Querriegel 52 erstreckt.
Oberhalb des Querriegels 52 enthält jeder Stift eine Verbreiterung, beispielsweise eine Mutter 53. Unterhalb des
Querriegels 52 ist um jeden Stift 51 herum eine Feder 54
angeordnet, die sich auf der Oberseite der Leitelemente 49
abstützt. Die Leitelemente 49 dienen dazu, die in den Abteilen 48 des Riemens 30 angeordneten Pistazien so lange in
diesen Abteilen zu halten, bis sie von den sich nähernden
Andrückscheiben 41 fest genug gepackt sind, daß ein seitliches Ausweichen nicht mehr möglich ist.

Aus Fig. 5 ist zu sehen, daß die beiden Andrückscheiben 41
nach oben, und aus Fig. 6, daß sie auch nach vorne leicht
konvergieren. Beide Scheiben sind in Lagern 55 gelagert,
wobei die Lager 55 an einer gemeinsamen Grundplatte 56 befestigt sind. Auf dieser Grundplatte 56 ist auch der Elektromotor 14 befestigt, dessen Ausgangswelle 57 in Richtung
des Pfeiles 58 rotiert. Zwischen der Ausgangswelle 57 und
der Andrückscheibe 41 ist eine leicht flexible Kupplung
eingesetzt, die handelsüblich ist. Eine derartige flexible
Kupplung ist auch zwischen der in Fig. 5 rechten Andrückscheibe und der Riemenscheibe 42 sowie zwischen der Riemenscheibe 42 und der in Fig. 5 linken Andrückscheibe 41 angeordnet.

Am Außenumfang der beiden Andrückscheiben 41 angreifend,
ist eine Gummiwalze 81 drehbar gelagert. Die Drehachse der
Gummiwalze 81 verläuft etwa parallel zur Drehachse der beiden Andrückscheiben. Die Gummiwalze 81 ist derart angeordnet, daß sie mit einer gewissen Kraft an dem Außenumfang
der Andrückscheiben 41 angreift. Das aufgrund der flexiblen
Kupplung vorhandene Spiel der beiden Scheiben in Drehrichtung kann durch die Gummiwalze 81 verringert, unter Umständen auch aufgehoben werden. Diese Anordnung ist insbesondere dann sinnvoll, wenn mehrere derartige Andrückelemente
13 nebeneinander angeordnet von dem gleichen Motor 14 angetrieben werden. In diesem Fall summiert sich das Drehspiel.
Die Anordnung mehrerer, von einem gemeinsamen Motor angetriebener Andrückeinrichtungen ist jedoch besonders sinnvoll.

Fig. 6 zeigt rechts eine Aufsicht auf das Abgabeende der
Vorsortiereinrichtung 11. Beide Walzen 27, die in Richtung
der Pfeile 59 rotieren, sind in Lagerelementen 60 gelagert.
Eine der beiden Walzen 27 weist ein im Durchmesser reduziertes Ende 61 auf, so daß hier eine Lücke gebildet ist.
Durch diese Lücke fallen die Pistazien in das obere Ende
des Übergaberohres 29, von wo aus sie auf die Oberseite des
Riemens 30 gelangen.

Zwischen dem Riemen und den beiden Führungsblechen 46 ist
jeweils eine Führungsleiste 62 angeordnet, die sich in
Längsrichtung des Riemens 30 erstrecken. Diese Führungsleisten 62 sind an den Führungsblechen 46 angenietet. In
ihrem in Richtung auf die Andrückscheiben 41 zu gerichteten
vorderen Ende setzen sie sich als Kunststoffteile 63 fort,
die zwischen den Scheiben 41 und deren Riemen 30 liegen und
gegen den Riemen 30 angedrückt werden. Dadurch verringern
sie die Vibration des Riemens 30 in diesem Bereich.

Wie sich aus Fig. 4 ergibt, steigen die Führungsleisten 62
etwas stärker als der Riemen 30, so daß sie zu beiden Seiten des Riemens 30 kurz vor den Andrückscheiben 41 höher
liegen als der Boden der Abteile 48.

Fig. 7 zeigt in vergrößertem Maßstab Einzelheiten des Riemens 30 und der Führungsbleche 46 und Führungsleisten 62.
Der Riemen 30 weist auf seiner Oberseite die Höcker 47 auf, die im Querschnitt etwa trapezförmig ausgebildet sind. Die jeweils kürzere Trapezseite 69 ist nach oben gerichtet. Zwischen den Höckern 47 sind dadurch Abteile 48 gebildet, die ebenfalls trapezförmig sind. Beidseits des Riemens 30 sind die Führungsleisten 62 angeordnet, deren Oberkanten 83 in diesem Bereich etwa mit den Böden 64 der Abteile 48 fluchtet. Im Bereich der Aufgabestelle 44 sind die Führungsleisten 62 unterbrochen und an ihrer Stelle ist eine Rinne 65 angeordnet, die den Riemen in seinem von den Höckern freien Bereich umfaßt und mit der Vibrationseinrichtung 45 verbunden ist. An dieser Stelle wird der Riemen 30 in Vibrationen versetzt. Auf der in Bewegungsrichtung des Riemens 30 rechten Seite ist ein Abstreifelement 66 angeordnet, das eine langsam ansteigende Rampe 67 und einen sich daran anschließenden, parallel zum Riemen 30 verlaufenden Bereich 68 aufweist. Der parallele Bereich 68 fluchtet in der Höhe mit der Oberseite 69 der Höcker 47.

Dem Abstreifelement 66 gegenüberliegend ist ein zweites Abstreifelement 70 angeordnet, das unsymmetrisch zu dem ersten Abstreifelement 66 ausgebildet ist. Es enthält eine ansteigende Rampe 71 und anschließend daran eine absteigende Rampe 72. Die zwischen den Rampen 71 und 72 gebildete Spitze 73 liegt höher als die Oberseite 69 der Höcker 47. Durch das Zusammenwirken der beiden Abstreifelemente 66 und 70 wird dafür gesorgt, daß in den Abteilen 48 zwischen je zwei Höckern 47 nur eine Pistazie liegt. Sollten mehrere Pistazien in einem Abteil liegen, so werden diese einseitig angehoben und die darüberliegenden Pistazien nach hinten, d.h. in Fig. 7 nach rechts, abgedrängt.

Fig. 8 zeigt nun in vergrößertem Maßstab die Leitelemente 49, die schon in Fig. 4 zu sehen waren. Der Riemen 30 bewegt sich in Richtung des Pfeiles 74. Jedes Abstreifelement 49 kann gegen die Wirkung der Federn 54 angehoben werden.

Mit Ausnahme des in Fig. 8 ganz links angeordneten Leitelementes enthält jedes Leitelement 49 einen Zapfen 75, der in
eine Längsnut 75 des jeweils nach links benachbarten Leitelementes 49 eingreift. Wird daher ein Leitelement 49 durch
eine ungeschickt liegende oder zu große Pistazie angehoben,
so wird nach Anheben um eine bestimmte Strecke das jeweils
nach links, d.h. in Bewegungsrichtung des Riemens 30 benachbarte Leitelement ebenfalls mit angehoben. Durch diese
Leitelemente wird jede Pistazie so lange noch geführt, bis
sie zwischen den beiden Andrückplatten 41 ausreichend fest
eingeklemmt ist, so daß sie beim weiteren Stauchen nicht
seitlich ausweichen kann.

Die Wirkungsweise der Vorrichtung ist folgendermaßen. Die
in den Abteilen 48 zwischen den Höckern 47 liegenden Pistazien sind quer zur Längsrichtung des Riemens 30 ausgerichtet. Das heißt, die Längsrichtung der Pistazien verläuft quer zum Riemen 30. Sie gelangen nun zwischen die
beiden Andrückscheiben 41. Je weiter sie auf dem Riemen 30
zwischen die beiden Andrückscheiben 41 gelangen, desto enger wird der Abstand zwischen den Andrücksscheiben, da diese ihre engste Stelle etwa bei der gestrichelten Markierung
77 in Fig. 4 haben. Sobald die Pistazien zu einer Stelle
gelangt sind, wo der Abstand zwischen den beiden Andrückscheiben etwas kleiner ist als ihre Längsrichtung, werden
sie von den Andrückscheiben erfaßt und schräg aus den Abteilen 48 des Riemens 30 angehoben. Sie bewegen sich nun
auf einer Kreisbogenbahn, wobei sich längs dieser Bahn die
beiden Bereiche der Andrückscheiben, die die Endbereiche
der Pistazien halten, immer mehr annähern. Zu irgend einem
Punkt ist nun die Stauchung ausreichend, um die Schale zu
sprengen. Es erfolgt dann keine weitere Stauchung mehr, da
die Annäherung der Andrückscheiben nicht mit Schwung erfolgt, sondern rein geometrisch. Dadurch wird die Pistazie
nach Brechen der Schale von jeder Krafteinwirkung frei, sie kann unter dem Einfluß ihres Gewichtes nach unten in den Sammeltrichter 16 fallen. Falls das Aufbrechen der Schale bereits in einem Bereich erfolgt, wo die Schale noch auf den Riemen 30 fällt, stört dies nicht, da auch Schalen und geschälte Kerne von dem Riemen weiterbefördert werden können.

Fig. 10 zeigt in einem Schnitt durch den Riemen 30 gestrichelt eingezeichnet eine Pistazie 78. Diese liegt in einem Abteil 48 zwischen zwei Höckern 47, wird rechts und links von den beiden Führungsblechen 46 und oben von dem Leitelement 49 geführt. Sie kann daher nicht ausweichen und wird auf diese Art in der richtigen Ausrichtung zwischen die Andrückscheiben 41 transportiert.

Fig. 9 zeigt eine leicht geänderte Ausführungsform der Andrückscheiben 41. Während die Andrückscheiben 41 nach Fig. 5 und 6 ebene, aufeinander zu gerichtete Flächen 79 aufweisen, sind die Andrückflächen 80 der Andrückscheiben 41 leicht kegelförmig ausgebildet. Damit kann erreicht werden, daß der Minimalabstand zwischen den einander gegenüberliegenden Andrückflächen 80 an der engsten Stelle unabhängig vom Radius überall gleich ist. Es ist selbstverständlich auch möglich, dafür zu sorgen, daß der Minimalabstand zwischen den Andrückflächen der Andrückscheiben 41 am Außenrand größer ist als in Richtung auf den Mittelpunkt der Scheiben. Bei der Anordnung der Zuführeinrichtung, so wie in Fig. 4 dargestellt, reicht es selbstverständlich aus, die Andrückflächen 80 kegelförmig auszugestalten.

Bei einem Ausführungsbeispiel haben die Andrückscheiben 41 einen Durchmesser von 18 cm, die Riemenscheibe 42 einen Durchmesser von 10 cm, ist die Riemenbreite 13 mm und rotieren die Andrückscheiben mit einer Drehzahl zwischen 17 und 85 U/min. Nimmt man an, daß sich der Stauchvorgang der Pistazie über einen Winkelbereich von etwa einer viertel Umdrehung erstreckt, bevor die Schale der Pistazie nachgibt, so würde dies bei der angegebenen Maximal-Drehzahl einer Stauchdauer von etwa einer sechstel Sekunde entsprechen. Der Stauchvorgang verläuft also wesentlich langsamer als bei dem Stauchen mit Hilfe eines Schlages.

———————

**0 209 147**

Dipl.-Ing. Prof. Werner Gramm
Dipl.-Phys. Edgar Lins

European Patent Attorneys

$\mathcal{1}$

Anwaltsakte

165-31 EP-1

Datum

17. Juli 1986

Verfahren und Vorrichtung
zum Herstellen geschälter Nüsse

- - - - -

A N S P R Ü C H E

1.  Verfahren zur Gewinnung geschälter Nüsse, insbesondere
    Pistazien, bei dem ungeschälte Nüsse einer im wesentlichen in Längsrichtung wirkenden Kraft unterworfen
    werden, dadurch gekennzeichnet, daß die Nüsse im Bereich ihrer Enden ergriffen, in Längsrichtung in kontinuierlich steigendem Maße gestaucht und bei Bruch der
    Schale sofort freigegeben werden.

2.  Verfahren nach Anspruch 1, dadurch gekennzeichnet, daß
    die Nüsse während des Stauchens vorzugsweise quer zu
    ihrer Längsrichtung bewegt werden.

3. Verfahren nach Anspruch 1 oder 2, dadurch gekennzeichnet, daß die Nüsse mindestens während des Ergreifens und zu Beginn ihrer Stauchung seitlich ihres Bewegungsweges geführt werden.

4. Verfahren nach einem der vorhergehenden Ansprüche, dadurch gekennzeichnet, daß die Nüsse während des Stauchens auf einem von ihrer Größe abhängigen Weg bewegt werden.

5. Verfahren nach einem der Ansprüche 2 bis 4, dadurch gekennzeichnet, daß die Nüsse auf einem Kreisbogen bewegt werden.

6. Verfahren nach einem der vorhergehenden Ansprüche, dadurch gekennzeichnet, daß die Nüsse vor dem Ergreifen in ihrer Größe vorsortiert werden.

7. Verfahren nach einem der vorhergehenden Ansprüche, dadurch gekennzeichnet, daß die Nüsse vor ihrem Ergreifen in ihrer Richtung ausgerichtet werden.

8. Verfahren nach einem der vorhergehenden Ansprüche, dadurch gekennzeichnet, daß die geöffneten Nüsse zusammen mit ihren Schalen bzw. Schalenresten einer Windsichtung unterworfen werden.

9. Verfahren nach einem der vorhergehenden Ansprüche, dadurch gekennzeichnet, daß die geöffneten Nüsse zusammen mit ihren Schalen bzw. Schalenresten in einen nach oben gerichteten Saugluftstrom gebracht werden.

10. Verfahren nach einem der vorhergehenden Ansprüche, dadurch gekennzeichnet, daß mehrere Nüsse im wesentlicher gleichzeitig bzw. zeitlich überlappend gestaucht werden.

11. Vorrichtung zur Gewinnung von geschälten Nüssen, insbesondere zur Durchführung des Verfahrens nach einem der vorhergehenden Ansprüche, dadurch gekennzeichnet, daß sie mindestens ein von einem Antrieb (15) antreibbares, zyklisch arbeitendes Andrückelement (13) mit einem sich kontinuierlich verringernden Abstand von einem Gegenelement sowie eine Zuführeinrichtung (12) zum Einbringen der ungeschälten Nüsse in den Bereich zwischen dem Andrückelement (13) und dem Gegenelement aufweist.

12. Vorrichtung nach Anspruch 11, dadurch gekennzeichnet, daß sie zwei von einem Antrieb (15) antreibbare umlaufende Andrückelemente (13) mit sich in Umlaufrichtung allmählich verringerndem gegenseitigem Abstand aufweist und die Zuführeinrichtung die Nüsse in den Bereich zwischen den Andrückelementen einbringt.

13. Verfahren nach Anspruch 11 oder 12, dadurch gekennzeichnet, daß im Freigabe-Bereich des mindestens einen Andrückelements (13) eine mit einer Windsichteinrichtung verbundene Sammeleinrichtung zur Aufnahme der geschälten Nüsse und der Schalen bzw. Schalenreste angeordnet ist.

14. Vorrichtung nach Anspruch 13, dadurch gekennzeichnet, daß die Windsichteinrichtung ein senkrecht verlaufendes, einen nach oben gerichteten Luftstrom enthaltendes Windsichtrohr (18) aufweist, mit dem die einen Sammeltrichter (16) aufweisende Sammeleinrichtung über ein eine Verengung aufweisendes Rohr (17) verbunden ist.

15. Vorrichtung nach Anspruch 14, dadurch gekennzeichnet, daß mit dem Windsichtrohr (18) ein Sauggebläse (19) verbunden ist, das in diesem einen nach oben gerichteten Luftstrom erzeugt.

16. Vorrichtung nach Anspruch 14 oder 15, dadurch gekennzeichnet, daß das untere Ende (22) des Windsichtrohrs (18) oberhalb einer Nachsortiereinrichtung (23) endet.

17. Vorrichtung nach Anspruch 16, dadurch gekennzeichnet, daß die Nachsortiereinrichtung (23) zwei gegensinnig rotierende Sortierwalzen (27) aufweist, die leicht divergierend angeordnet sind.

18. Vorrichtung nach einem der Ansprüche 12 bis 17, dadurch gekennzeichnet, daß die Andrückelemente (13) zwei mit gleicher Drehzahl rotierende, leicht schräg zueinander gestellte Scheiben (41) sind, deren aufeinander zugewandte Flächen (79, 80) vorzugsweise unregelmäßig profiliert sind.

19. Vorrichtung nach Anspruch 18, dadurch gekennzeichnet, daß die Drehachsen beider Scheiben mit einer Horizontalebene einen Winkel (a) von etwa 1° - 2° und mit einer Vertikalebene einen Winkel (ß) von etwa 2° bis 6° einschließen.

20. Vorrichtung nach Anspruch 18 oder 19, dadurch gekennzeichnet, daß die Stelle des geringsten Abstandes zwischen den beiden Scheiben (41), in Drehrichtung gesehen, hinter dem höchsten Punkt und vor dem horizontalen Durchmesser der Scheiben (41), vorzugsweise im Bereich von etwa 30° - 60° hinter dem höchsten Punkt, liegt.

21. Vorrichtung nach einem der Ansprüche 11 bis 20, dadurch gekennzeichnet, daß die Zuführeinrichtung (12) einen umlaufenden Riemen (30) mit quer zu seiner Längsrichtung verlaufend angeordneten prismenartige Höckern (47) aufweist, die zwischen einander Aufnahmeabteile (48) zur Aufnahme je einer quer zur Längsrichtung des Riemens liegenden Nuss (78) bilden.

22. Vorrichtung nach Anspruch 21, dadurch gekennzeichnet, daß der Riemen (30) über eine etwa konzentrisch zu den Andrückscheiben (41) angeordnete, vorzugsweise zusammen mit diesen angetriebene Riemenscheibe (42) geführt ist.

23. Vorrichtung nach Anspruch 21 oder 22, dadurch gekennzeichnet, daß der obere Abschnitt (30a) des Riemens (30) in Richtung auf die Andrückscheiben (41) ansteigt und mit der Horizontalen einen Winkel von etwa 15° - etwa 30°, vorzugsweise etwa 24°, einschließt.

24. Vorrichtung nach einem der Ansprüche 21 bis 23, dadurch gekennzeichnet, daß der Riemen (30) im Bereich des dem Andrückelement (13) abgewandten Aufgabeendes eine Vibrationseinrichtung (45) aufweist.

25. Vorrichtung nach einem der Ansprüche 11 bis 24, dadurch gekennzeichnet, daß die Zuführeinrichtung (12) zwischen einer Abgabestelle (28) einer Vorsortiereinrichtung (11) und den Andrückelementen (13) angeordnet ist.

26. Vorrichtung nach einem der Ansprüche 11 bis 25, dadurch gekennzeichnet, daß die Vorsortiereinrichtung (11) ein von ihrer Abgabestelle (28) zu der Aufgabestelle (44) der Zuführeinrichtung (12) verlaufendes Übergaberohr (29) aufweist.

27. Vorrichtung nach einem der Ansprüche 21 bis 26, dadurch gekennzeichnet, daß zu beiden Seiten des oberen Abschnittes (30a) des Riemens (30) Führungsbleche (46) angeordnet sind.

28. Vorrichtung nach einem der Ansprüche 21 bis 27, dadurch gekennzeichnet, daß im Bereich der Aufgabestelle (44) des Riemens (30) Abstreifelemente (66, 70) vorgesehen sind.

29. Vorrichtung nach einem der Ansprüche 11 bis 28, dadurch gekennzeichnet, daß im Übergangsbereich zwischen der Zuführeinrichtung (12) und den Andrückelementen (13) nachgiebig angeordnete Leitelemente (49) vorgesehen sind, die die Nüsse (78) in der Zuführeinrichtung (12), vorzugsweise den Abteilen (48) des Riemens (30), führen.

30. Vorrichtung nach Anspruch 29, dadurch gekennzeichnet, daß die Leitelemente (49) mehrere unter Federspannung stehende vertikal bewegliche Schieber sind, die sich gegenüber ihrem jeweils benachbarten Schieber um einen begrenzten Betrag bewegen können.

31. Vorrichtung nach einem der Ansprüche 18 bis 30, dadurch gekennzeichnet, daß die einander zugewandten Andrückflächen (79, 80) der Andrückscheiben (41) eben oder leicht kegel- bzw. kegelstumpfförmig ausgebildet sind.

- - - - - -

FIG.1

FIG. 2

FIG. 3

FIG. 4

FIG. 5

FIG. 6

FIG. 7

FIG. 8

FIG. 9

FIG. 10